# EUROPÄISCHE PATENTANMELDUNG

(11) **EP 0 805 020 A2**
(43) Veröffentlichungstag der Anmeldung: **05.11.1997**
(21) Anmeldenummer: 97107149.3
(22) Anmeldetag: 30.04.1997
(51) Int. Cl.: B30B 15/10, B30B 15/12, F16D 67/04

(54) **Vorrichtung zur Drehmoment-Übertragung**

(30) Priorität: 04.05.1996 DE 19617951
(71) Anmelder: SCHULER PRESSEN GmbH & Co., 73033 Göppingen (DE)
(72) Erfinder: Schade, Volker, 73079 Süssen (DE); Bässler, Hans, 73054 Eislingen (DE)

(57) **Zusammenfassung**

Bei einer Brems- und/oder Kupplungsvorrichtung (1) ist ein gegen Überdruck abgedichtetes Kühlsystem vorgesehen, bei dem flüssiges Kühlmittel unter Druck Reibelementen (32) zugeführt wird und zuerst mit Flächenbereichen der Reibelemente (32) in Berührung kommt, deren Relativgeschwindigkeit am größten ist. Außerdem ist die zur Betätigung der Reibelemente (32) erforderliche Betätigungseinrichtung (35) mit der Kupplungshälfte (6) verbunden, die in Betrieb geringeren Drehbeschleunigungen unterliegt. Dies reduziert die Wärmeentstehung.

## Beschreibung

Die Erfindung betrifft eine Vorrichtung mit den Merkmalen des Oberbegriffs des Anspruchs 1 und des Anspruchs 5. Die Vorrichtung dient dem bedarfsweisen drehfesten Kuppeln von Maschinenelementen miteinander. Die Vorrichtung ist insbesondere als Brems- oder Kupplungseinrichtung an mechanischen Pressen, wie bspw. Karosseriepressen, zur Steuerung des Kraftflusses von und zu dem Pressenstempel vorgesehen.

Karosseriepressen sind Exzenterpressen, bei denen der Exzenter meist über ein Untersetzungsgetriebe angetrieben ist, dessen Eingangs- oder Antriebswelle über eine Brems- und Kupplungsvorrichtung mit einer Antriebsquelle verbunden ist. Die Antriebsquelle dreht kontinuierlich. Zur Lastpufferung ist an der Antriebsquelle ein Schwungrad vorgesehen.

Die Brems- und Kupplungseinrichtung ist eine Reibungskupplung mit Reibelementen, die beim Einkuppeln aneinander reiben. Die Reibung führt zu einer Drehzahlangleichung der zu kuppelnden Maschinenelemente und somit zu einer Beschleunigung und/oder Verlangsamung derselben, wobei sich die Reibelemente erwärmen. Bei Karosseriepressen wird wegen der häufigen und regelmäßigen Beschleunigungs- und Bremsvorgänge eine beträchtliche Leistung umgesetzt, so daß die Reibelemente gekühlt werden müssen.

Aus der DE 28 00 838 C2 ist eine Reibungskupplungs- und Bremskombination für Pressen bekannt, die mit einem offenen Kühlkreislauf arbeitet. Diese Vorrichtung weist zwei auf einer drehbar gelagerten Welle sitzende Lamellenpakete auf, die jeweils eine drehfest, jedoch axial verschiebbar mit der Welle gekuppelte Lamellengruppe enthalten. Während ein Lamellenpaket eine Gruppe außenumfangsseitig unverdrehbar gehaltener Lamellen aufweist, sind Lamellen des anderen Lamellenpakets außenumfangsseitig drehfest mit einem Schwungrad verbunden. Zur Betätigung dient ein zu der Welle koaxialer, federnd vorgespannter Pneumatikzylinder großen Durchmessers und sehr kurzer Länge.

Zur Kühlung der Lamellen ist ein koaxial in der Welle angeordneter Kühlmittelkanal vorgesehen, der sich im Bereich der Lamellenpakete in radial nach außen verlaufende Kanäle verzweigt. Diese Kanäle sind nochmals aufgefächert und münden jeweils mit mehreren Austrittsbohrungen im Innenumfangsbereich der Lamellenpakete. Zum Auffangen des von der umlaufenden Brems- und Kupplungsvorrichtung durch Fliehkraft nach außen geschleuderten Kühlmittels ist ein mit dem Schwungrad umlaufendes ringförmiges Gehäuse vorgesehen, an dessen einander gegenüberliegenden Stirnseiten Auffangschalen zum Abführen herausgeschleuderten Kühlmittels vorgesehen sind.

Aus der DE 43 42 163 A1 ist eine Brems- und Kupplungseinrichtung mit zwei Lamellenbremsen bekannt, von denen ein Planetengetriebe geschaltet wird. Die erste, als Lamellenkupplung bezeichnete Bremse überträgt bedarfsweise das Stützmoment des Hohlrades des Planetengetriebes auf ein Getriebegehäuse. Das andere, als Lamellenbremse bezeichnete Lamellenpaket dient zur Kopplung des Planetenträgers an das Getriebegehäuse. Die unverdrehbar gelagerten Lamellen sind an ihrer Außenumfangsseite mit dem Getriebegehäuse verbunden. Die anderen Lamellenpakete sitzen an ihrer Innenumfangsseite auf hohlwellenartig ausgebildeten Lamellenträgern. Zur wechselweisen Betätigung der Lamellenbremse ist ein zwischen den Lamellenpaketen angeordneter nicht drehender Ringkolben vorgesehen, der druckmittelbetätigt axial bewegbar ist. Zur Kühlung der Lamellenkupplung (Bremse) weist das Gehäuse einen ringförmigen Wassermantel auf. Zusätzlich sind die Lamellenträger mit Radialbohrungen versehen, über die zur Kühlung dienendes Öl durch die Lamellenpakete in Radialrichtung von innen nach außen gefördert wird.

Außderdem ist aus der US-PS 38 60 100 eine Brems- und Kupplungseinrichtung bekannt. Mittels zweier Lamellenpakete ist eine Welle wahlweise mit einem Gehäuse oder mit einem Zahnrad verbindbar, das mit einem Ritzel der Antriebswelle kämmt. Als Betätigungseinrichtung dient ein ringförmiger Kolben, der in einer ringförmigen, sich axial nach einer Seite öffnenden und koaxial zu der Abtriebswelle angeordneten Ausnehmung des Gehäuses sitzt. Der Kolben betätigt eins der Lamellenpakete über ein Schrägrollenlager.

Bei allen genannten Vorrichtungen ist die Belastbarkeit durch die Wärmeentwicklung begrenzt.

Davon ausgehend ist es Aufgabe der Erfindung, eine Vorrichtung zur beeinflußbaren Drehmomentübertragung zu schaffen, die bei geringem Bauraum eine hohe Leistungsfähigkeit aufweist.

Gemäß Anspruch 1 ist die Durchströmungsrichtung und die Führung von Kühlmittel durch das Lamellenpaket von außen nach innen, d.h. entgegen der Wirkung der Fliehkraft festgelegt. Damit gelangt noch kaltes Kühlmittel zunächst an die in Radialrichtung äußeren Bereiche der Lamellenpakete, wo die größte Geschwindigkeitsdifferenz und der größte Leistungsumsatz auftreten. Die verstärkte Kühlung der kritischen Außenbereiche erhöht die Leistungsfähigkeit, d.h. die erreichbare Verlustleistung der Vorrichtung.

Darüber hinaus wird durch die Kühlmittelführung von außen nach innen ein geringer Kühlmitteldruck in dem Innenraum der Vorrichtung erreicht, was die Abdichtung zwischen Welle und Gehäuse erleichtert.

Vorzugsweise bilden der zu dem Reibungsmittel führende Kanal und der von dem Reibungsmittel wegführende Kanal ein nach außen statisch und nach innen dynamisch abgedichtetes Kühlsystem. Die Abdichtung des Kühlsystems gegen erhöhten Innendruck erfolgt durch eine nach außen geschlossene Ausbildung der kühlmittelführenden Räume ohne Verwendung von Labyrinthdichtungen, Auffangschalen oder -ringen zum Auffangen von Schleuderöl. Als Dichtungen zwischen bewegten Teilen werden schleifende Dichtungen, wie Lippendichtungen oder dergleichen verwendet. Es wird damit eine einfache und platzsparende Konstruktion erreicht und die Herstellungskosten gesenkt.

Außerdem werden Abdichtungsprobleme vermieden, die sich bei Verwendung von berührungslosen Dichtungen aufgrund der hohen erforderlichen Kühlölströme ergeben würden. Damit wird es möglich, Kühlmittelströme, die naturgemäß größer sind als Ölströme, wie sie bspw. zur Lagerung von Maschinenelementen verwendet werden, sicher zu führen.

Durch die geschlossene Ausbildung des Kühlsystems und die Verwendung von schleifenden Dichtungen kann das Kühlmittel mit erhöhtem Druck durch die Lamellenpakete (Reibungsmittel) gefördert werden. Dies und die verbesserte Abdichtung ermöglicht die Erhöhung der Kühlmittelströme, der Kühlwirkung und somit der Leistungsfähigkeit.

Vorteilhafterweise definieren die Brems- und Kupplungselemente (Kupplungshälften) ein Gehäuse, dessen Innenraum vorzugsweise blasenfrei mit Kühlmittel (Öl) gefüllt ist. Eine durch die Ölfüllung ggf. entstehende Vergrößerung der Scherarbeit, d.h. Verlustleistung der Kupplung, kann in Kauf genommen werden, nachdem sich herausgestellt hat, daß die vollständige Füllung des Gehäuses mit Kühlmittel einer Schaumbildung wirksam entgegenwirkt, was die Kühlwirkung verbessert.

Das Kühlsystem der Vorrichtung weist gemäß Anspruch 5 eine zentrale Kühlmittelzuführung über ein koaxiales Anschlußstück auf. Das Anschlußstück weist sowohl Kühlmittelkanäle als auch bedarfsweise einen Druckmittelkanal für die Betätigungseinrichtung auf und ermöglicht die Führung von Kühlmittel im geschlossenen Kreislauf und in beliebiger Richtung sowie mit einem hydraulischen Überdruck.

Die Vorrichtung ist vorzugsweise als außenschließendes System ausgebildet. Dadurch ist die Betätigungseinrichtung mit dem äußeren Element (der Kupplungshälfte) verbunden, das (die) betriebsmäßig geringeren Drehbeschleunigungen oder -verzögerungen unterliegt. Bei Fressen ist dies die mit einem Schwungrad verbundene Kupplungshälfte, die vorzugsweise einen bezüglich des Lamellenpaketes radial außenliegenden Lamellenträger aufweist. Das Massenträgheitsmoment der zu beschleunigenden und zu bremsenden Antriebswelle ist auf ein Minimum reduziert. Entsprechend ist die beim Kuppeln mit dem Schwungrad entstehenden Verlustleistung reduziert. Dies ermöglicht eine Verminderung des erforderlichen Bauvolumens oder eine Erhöhung der zu übertragenden Leistung bzw. Drehmomente. Trägheitsmomente weiterer Elemente, wie Exzenterantrieb, Stößel usw. haben infolge eines zwischengeschalteten Untersetzungsgetriebes geringeren Einfluß.

Eine hydraulische Betätigungseinrichtung bietet ein schnelles Ansprechverhalten und eine hohe Kraftentwicklung bei niedrigem Bauvolumen und Gewicht.

Eine vorteilhafte Ausführungsform macht sowohl von den Merkmalen des Anspruchs 1 als auch von den Merkmalen des Anspruches 5 Gebrauch. Weitere Merkmale vorteilhafter Ausführungsformen sind Gegenstand von Unteransprüchen und ergeben sich aus der nachfolgenden Beschreibung.

In der Zeichnung sind Ausführungsbeispiele der Erfindung dargestellt. Es zeigen:
- Fig. 1: eine Kupplungseinrichtung mit geschlossenem Kühlkreislauf zum bedarfsweisen Kuppeln einer Welle mit einem Schwungrad, in schematisierter Längsschnittdarstellung,
- Fig. 2: eine Lamellenbremse mit geschlossenem Kühlkreislauf, zum bedarfsweisen Stillsetzen einer Welle, in schematisierter Längsschnittdarstellung, und
- Fig. 3: eine weitere Ausführungsform einer Lamellenkupplungseinrichtung mit geschlossenem Kühlkreislauf zur Kopplung einer drehbar gelagerten Welle mit einem stillgesetzten oder langsam umlaufenden Gehäuse.

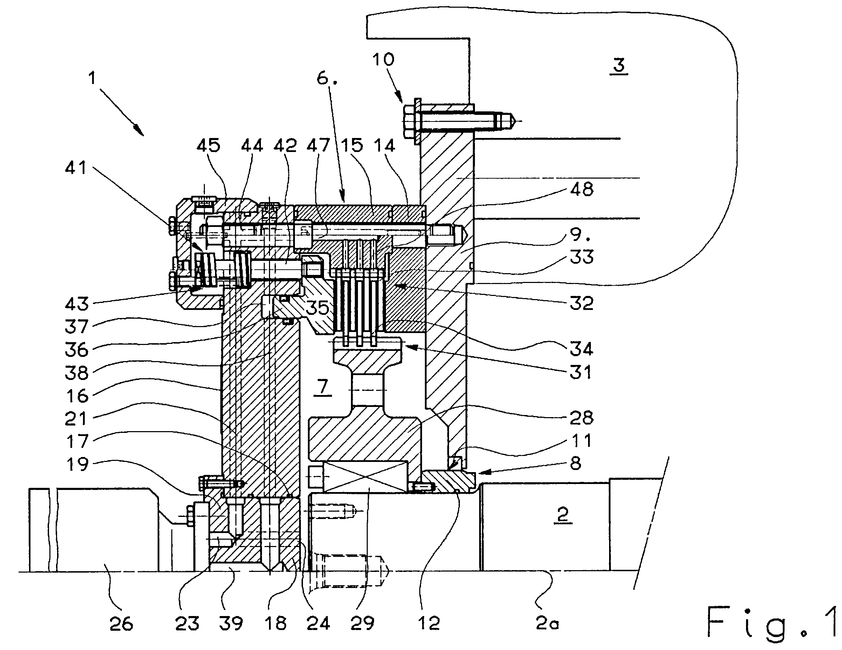

In Fig. 1 ist eine Kupplung 1 veranschaulicht, die zum bedarfsweisen Kuppeln einer drehbar gelagerten Antriebswelle 2 mit einem zu deren Drehachse 2a konzentrischen, in Fig. 1 lediglich abschnittsweise veranschaulichten Schwungrad 3 dient. Die Kupplung 1 dient der gesteuerten Kraftübertragung zu dem Stößel einer nicht weiter veranschaulichten Presse für Karosserieteile oder vergleichbare Teile. Zwischen der Antriebswelle 2 und dem Exzenter des Stößels sind weitere Getriebeelemente, insbesondere ein Untersetzungsgetriebe, angeordnet.

Die Kupplung 1 weist eine äußere, an das Schwungrad 3 gekoppelte Kupplungshälfte 6 auf. Diese bildet ein zu der Antriebswelle 2 konzentrisches Gehäuse mit einem gegen Überdruck abgedichteten Innenraum 7. Zu der Kupplungshälfte 6 gehört eine eine zentrale Öffnung 8 aufweisende Platte 9, die mittels Bolzen 10 mit dem Schwungrad 3 verbunden ist. An der Öffnung 8 weist die Platte 9 eine an einer Ringschulter aufgenommene Dichtung 11 auf, die den Innenraum 7 gegen die durch die Öffnung 8 geführte Welle 2 abdichtet. Die Dichtung 11 ist bspw. ein Radialdichtring, dessem Dichtlippe mit einem auf der Welle 2 drehfest sitzenden Ring 12 zusammenwirkt.

Koaxial zu der Drehachse 2a ist ein zu der Platte 9 drehfester Gehäusering 14 vorgesehen, der unverdrehbar mit einem ringförmigen Lamellenträger 15 in Verbindung steht, der seinerseits eine Abschlußplatte 16 trägt. Diese weist koaxial zu der Drehachse 2a eine Öffnung 17 auf, in der ein Anschlußstück 18 sitzt, das an der Anschlußplatte 16 durch einen Flansch 19 gehalten ist. Das Anschlußstück 18 dient dem Anschluß in der Abschlußplatte 16 radial verlaufender, voneinander beabstandeter Kanäle 21 für Kühlmittel, deren Funktion an späterer Stelle beschrieben wird. Ein Kanal 23 und ein Kanal 24 verbinden den Kanal 21 und den Innenraum 7 mit einer Drehzuführeinrichtung 26.

Während die äußere Kupplungshälfte 6 von dem durch die Platte 9, den Gehäuseabschnitt 14, den Lamellenträger 15 und die Abschlußplatte 16 gebildeten Gehäuse definiert ist, sitzt koaxial zu der Längsmittelachse 2a eine zweite Kupplungshälfte 28 mittels eines Spannsatzes 29 drehfest auf der Welle 2. Die Kupplungshälfte 28 bildet an ihrer Außenumfangsseite einen Lamellenträger 31. Sowohl der Lamellenträger 15 als auch der Lamellenträger 31 sind mit axial verlaufenden Zähnen versehen, die aufeinander zu weisen.

Zwischen den Lamellenträgern 15, 31 ist ein Lamellenpaket 32 gehalten, dessen Lamellen 33, 34 abwechselnd mit dem äußeren Lamellenträger 15 und dem inneren Lamellenträger 31 drehfest, jedoch axial verschiebbar gekuppelt sind. Die mit dem Lamellenträger 31 gekuppelten Lamellen 34 sind Stahllamellen mit in die Reibflächen eingefrästen, kreuzweise verlaufenden Kühlnuten. Die Lamellen 33 sind Stahllamellen mit Sinterauflage.

Die Kupplung 1 ist außenschließend ausgebildet. Als Widerlager für das Lamellenpaket 32 weist der Gehäuseabschnitt 14 eine plane, mit der in Fig. 1 rechtsseitigen Lamelle 33 in Anlage stehende Druckfläche auf. Auf der Gegenseite des Lamellenpaketes 32 ist ein ringförmig ausgebildeter, hydraulisch betätigter Kolben 35 mit einer planen Druckfläche angeordnet. Der Kolben weist einen ringförmigen Axialvorsprung 36 auf, der in einer in der Abschlußplatte 16 vorgesehenen, sich axial öffnenden, koaxialen Ringnut 37 abgedichtet und axial verschiebbar sitzt. Die Ringnut 37 definiert somit einen "Zylinder" für den Kolben 35, der über einen in der Abschlußplatte 16 radial verlaufenden Kanal 38 druckbeaufschlag- und druckentlastbar ist. Der Kanal 38 ist über einen weiteren Kanal 39 in dem Anschlußstück 18 an die Drehzuführeinrichtung 26 angeschlossen.

Der Kolben 35 ist mittels einer Rückzugsvorrichtung 41 in eine Richtung von dem Lamellenpaket 32 weg vorgespannt. Dazu ist der Kolben 35 mit einem Satz axialer Zugstangen 42 verbunden, die die Abschlußplatte 16 bei entsprechenden Öffnungen durchsetzen. Die Zugstangen 42 stehen mit ihrem von dem Lamellenpaket 32 abliegenden Ende mit jeweils einer sich anderenends an der Abschlußplatte 16 abstützenden Druckfeder 43 in Verbindung.

Die über die Abschlußplatte 16 ragenden Enden der Zugstangen 42 sowie Köpfe oder Befestigungsmuttern von Spannbolzen 44, die den Gehäuseabschnitt 14, den Lamellenträger 15 und die Abschlußplatte 16 gegen die Platte 9 spannen, sind mit einem im Längsschnitt U-förmigen, ringförmigen Deckel 45 abgedeckt.

Die Kupplung 1 weist ein geschlossenes Kühlsystem auf. Jeder der radial verlaufenden, in Winkelabständen in der Abschlußplatte 16 angeordneten Kanäle 21 mündet jeweils in einen axialen Kanal 47, der sich, ausgehend von der Abschlußplatte 16, in den Lamellenträger 15 erstreckt. Dieser weist mehrere radiale Austrittskanäle 48 auf, die in der Nähe des Außenumfanges des Lamellenpaketes 32 münden. Das Lamellenpaket 32 ist von dem Ringkolben 35 und dem Gehäuseabschnitt 14 seitlich abgedichtet so weit gefaßt, daß aus den Austrittskanälen 48 austretendes Kühlmittel nur durch das Lamellenpaket 32 seinen Weg in den Innenraum 7 findet. Als Ausgang führt der Kanal 24 aus dem Innenraum heraus.

Die Kupplung 1 arbeitet wie folgt:

In Betrieb ist der Innenraum 7 blasenfrei mit Kühlöl gefüllt. Ist der von der Ringnut 37 gebildete Zylinder nicht druckbeaufschlagt, ist der Kolben 35 in seiner zurückgezogenen Position und das Lamellenpaket 32 ist nicht zusammengedrückt. Die Kupplung 1 trennt und die Welle 2 ist nicht an das Schwungrad 3 gekoppelt.

Wird der Kolben 35 über den Kanal 38 druckbeaufschlagt, drückt der Kolben 35 das Lamellenpaket 32 gegen den Gehäuseabschnitt 14, wodurch die Lamellen 34 von den mit dem Schwungrad 3 konstant umlaufenden Lamellen 33 mitgenommen werden. Über den Kanal 21, 47 sowie die Austrittskanäle 48 wird dem Lamellenpaket 32 permanent unter Druck Kühlöl zugeführt. Dieses wird entgegen der Wirkungsrichtung der Fliehkraft durch das Lamellenpaket 32 gepreßt und gelangt mit geringem Druck in den Innenraum 7 und aus diesem über den Kanal 24 nach außen, wo es gekühlt wird.

Durch den so gerichteten Ölkreislauf kommt das noch kalte Kühlöl zunächst mit den Außenbereichen des Lamellenpaketes 32 in Berührung, die aufgrund der hier größten Umfangsgeschwindigkeit die größte Wärmeentwicklung haben. Die Förderung des Öls kann mit relativ hohem Druck erfolgen, wodurch auch ein hoher Ölstrom mit einer entsprechend guten Kühlwirkung erzielt wird. Der Innenraum 7 ist, nachdem das Lamellenpaket 32 den Hauptströmungswiderstand darstellt, im wesentlichen drucklos oder hat lediglich einen geringen Druck, so daß die Dichtung 11 ohne größere Probleme eine ausreichende Dichtwirkung sicherstellt. Der Verzicht auf dynamische Dichtungen im äußeren Bereich sowie der Verzicht auf berührungslose Dichtungen ermöglicht es, in dem gesamten Ölkreislauf einen hydraulischen Überdruck aufrechtzuerhalten.

Durch die Anordnung des hydraulisch betätigten Kolbens 35 an der äußeren Kupplungshälfte 6, die mit dem Schwungrad 3 in Verbindung steht und somit keinen nennenswerten Drehbeschleunigungen unterliegt, kann die mit der Welle 2 verbundene Kupplungshälfte 28 trägheitsmomentsarm ausgebildet werden. Die bei der Beschleunigung der Welle 2 (einkuppeln) auftretende Verlustenergie wird somit gering gehalten, was die Wärmeentwicklung reduziert.

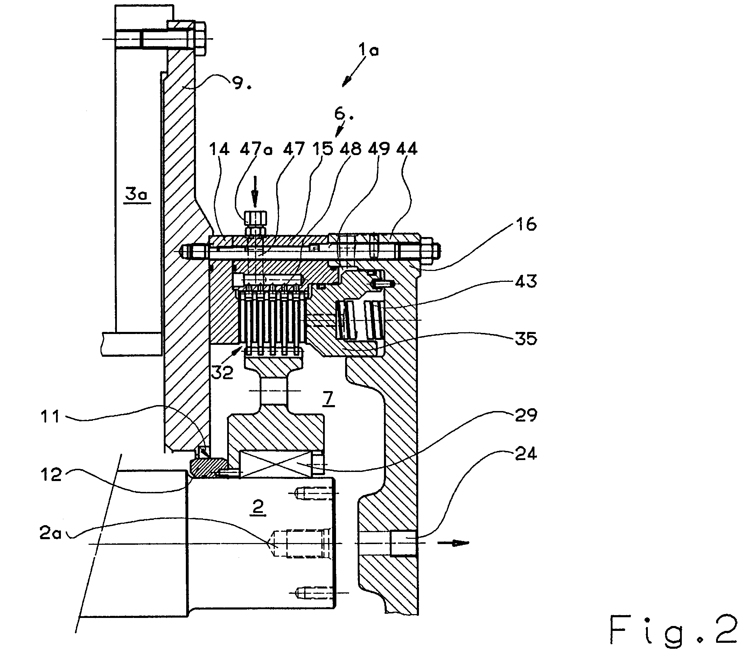

In Fig. 2 ist eine als Bremse 1a ausgebildete Vorrichtung zur Drehmomentübertragung veranschaulicht, die ebenfalls ein geschlossenes, gegen Überdruck abgedichtetes Kühlsystem aufweist. Wegen weitgehender struktureller Übereinstimmung mit der Kupplung 1a beschränkt sich die folgende Beschreibung auf die Unterschiede, wobei ergänzend auf die Beschreibung der Kupplung 1 verwiesen wird.

Anstelle des Schwungrades 3 ist die hier als Bremsengehäuse 6 ausgebildete äußere Kupplungshälfte mit einem ortsfest gelagerten Gehäuse 3a verbunden. Somit sind der Gehäuseabschnitt, der Lamellenträger 15 und die Abschlußplatte 16, die über den Spannbolzen 44 zusammengehalten sind, ortsfest. Der Kanal 47 für Kühlöl ist über einen Anschluß 47a unmittelbar nach außen geführt. Wie bei der Kupplung 1 mündet der Kanal 47 über Austrittskanäle 48 bei dem Außenumfang des Lamellenpaketes 32. Zu dem geschlossenen Kühlsystem gehört außerdem der Innenraum 7, der über den als Ausgang dienenden, in der Abschlußplatte 16 vorgesehenen Kanal 24 druckentlastbar ist. Der Abdichtung des Innenraumes 7 gegen die Welle 2 dient die Dichtung 11, die an dem Ring 12 anliegt.

Die Bremse 1a ist über den ringförmigen Kolben 35 betätigbar. Dieser ist mittels der Druckfedern 43 auf das Lamellenpaket 32, d.h. auf seine Bremsstellung hin, vorgespannt. Durch Druckbeaufschlagung eines zwischen dem Kolben 35, dem Lamellenträger 15 und der Abschlußplatte 16 gebildeten Ringraumes 49 ist der Kolben in seine Lösestellung überführbar, in der das Lamellenpaket 32 von Axialdruck entlastet ist.

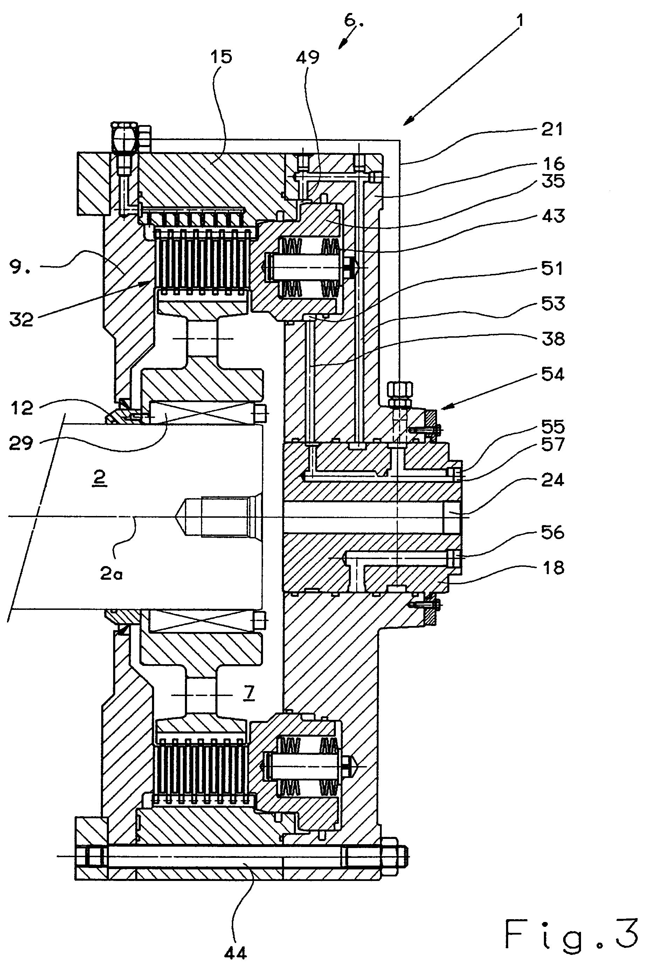

Bei der Vorrichtung nach Fig. 3 handelt es sich wiederum um eine Kupplung 1', die allerdings in Ruhestellung eingekuppelt ist und bei der die äußere Kupplungshälfte 6 lediglich für geringe Drehzahlen oder nur für Winkelstellbewegungen ausgelegt ist. Diese Vorrichtung nimmt eine Zwischenstellung zwischen Kupplung und Bremse ein. Die Beschreibung der Kupplung 1 gilt entsprechend, wobei die Kupplungshälfte 6 nicht mit einem Schwungrad sondern sonstigen Getriebemitteln wie einem Schneckengetriebe oder dergl. verbunden ist (46).

Ein Unterschied liegt darin, daß der Kolben 35 als doppelt wirkender Kolben ausgebildet ist und durch die Druckfern 43 auf seine Kupplungsstellung zu vorgespannt ist. Ein mit der Abschlußplatte 16 und dem Lamellenträger 15 definierter Ringraum 49 dient bei Druckbeaufschlagung dazu, den Kolben in seine Lösestellung zu überführen. Ein zwischen Abschlußplatte 16 und Kolben 35 definierter Ringraum 51 dient bei Druckbeaufschlagung zur Erzeugung einer die Druckfedern 43 unterstützenden Kraft.

Der in den Ringraum 51 führende Kanal 38 und ein weiterer, in den Ringraum 49 führender Kanal 53 sind radial verlaufend in der Abschlußplatte 16 angeordnet und enden an dem Umfang einer die Abschlußplatte 16 zentral durchsetzenden Öffnung. In dieser sitzt das ruhende Anschlußstück 15, das mittels einer Schulter-Ring-Verbindung oder ähnlichem Haltemittel 54 axial an der Abschlußplatte 16 gehalten ist, die in Bezug auf das Anschlußstück 18 drehbar ist. Das Anschlußstück 18 weist einen in jeder Drehstellung mit dem Kanal 38 kommunizierenden Kanal 55 und einen ebenfalls stellungsunabhängig mit dem Kanal 53 kommunizierenden Kanal 56 auf. Zusätzlich ist an dem Anschlußstück 18 ein Kanalanschluß 57 ausgebildet, der in den hier als separate Leitung zwischen der Abschlußplatte 16 und der Platte 9 ausgebildeten Kanal 21 führt. Dieser Kanal dient der Zuführung von Kühlöl zu dem Lamellenpaket 32.

Bei einer Brems- und/oder Kupplungsvorrichtung ist ein gegen Überdruck abgedichtetes Kühlsystem vorgesehen, bei dem flüssiges Kühlmittel unter Druck Reibelementen zugeführt wird und zuerst mit Flächenbereichen der Reibelemente in Berührung kommt, deren Relativgeschwindigkeit am größten ist. Außerdem ist die zur Betätigung der Reibelemente erforderliche Betätigungseinrichtung mit der Kupplungshälfte verbunden, die in Betrieb geringeren Drehbeschleunigungen unterliegt. Dies reduziert die Wärmeentstehung.

## Patentansprüche

1. Vorrichtung zur beeinflußbaren Übertragung von Drehmomenten zwischen Maschinenelementen (2, 3), insbesondere zur Übertragung von Brems- oder Antriebsdrehmomenten von oder auf eine Antriebswelle einer Presse,
mit einem ersten drehbar gelagerten Element (2) und mit einem zweiten Element (3), zwischen denen gesteuert in und außer Eingriff bringbare Reibungsmittel (32) angeordnet sind, denen eine wahlweise steuerbare Betätigungseinrichtung (35) zugeordnet ist, und
mit einer Kühleinrichtung, die einen zu dem Reibungsmittel (32) führenden Kanal (21) zur Zuführung eines fluiden Kühlmittels zu dem Reibungsmittel (32) sowie einem Raum (7) zur Abführung des Kühlmittels von dem Reibungsmittel (32) aufweist,
dadurch gekennzeichnet,
daß der zu dem Reibungsmittel (32) führende Kanal (21) und der von dem Reibungsmittel (21) weg führende Raum (7) derart angeordnet und mit Kühlmittel beaufschlagbar sind, daß das Reibungsmittel (32) von seiner radial außenliegenden Seite nach seiner radial innenliegenden Seite durchströmt ist.

2. Vorrichtung nach Anspruch 1, dadurch gekennzeichnet, daß der zu dem Reibungsmittel (32) führende Kanal (21) und der als Kanal wirkende und Kühlmittel von dem Reibungsmittel weg führende Raum (7) im Bereich der Vorrichtung (1) als ein nach außen statisch und nach innen dynamisch abgedichtetes Kühlsystem ausgebildet sind.

3. Vorrichtung nach Anspruch 2, dadurch gekennzeichnet, daß zur Abdichtung zwischen bewegten Teilen wenigstens eine schleifende Dichtung (11) vorgesehen ist.

4. Vorrichtung nach Anspruch 1, dadurch gekennzeichnet, daß die Elemente (6, 31) der Vorrichtung (1) ein Gehäuse mit einem Innenraum (7) definieren, das nach außen abgedichtet ist, in dem das Reibungsmittel (32) angeordnet ist und der in Betrieb mit Kühlmittel gefüllt ist.

5. Vorrichtung zur beeinflußbaren Übertragung von Drehmomenten zwischen Maschinenelementen (2, 3), insbesondere zur Übertragung von Brems- oder Antriebsdrehmomenten von oder auf eine Antriebswelle einer Presse,
mit einem ersten drehbar gelagerten Element (2) und mit einem zweiten Element (3), die unterschiedlichen Drehbeschleunigungen unterliegen und zwischen denen gesteuert in und außer Eingriff bringbare Reibungsmittel (32) angeordnet sind, denen eine wahlweise steuerbare Betätigungseinrichtung (35) zugeordnet ist, und
mit einer Kühleinrichtung (21, 7), die einen zu dem Reibungsmittel (32) führenden Kanal (21) zur Zuführung- oder Abführung eines fluiden Kühlmittels zu bzw. von dem Reibungsmittel (32) sowie einen Kanal (7) zur Zu- oder Abführung des Kühlmittels zu bzw. von dem Reibungsmittel (32) aufweist,
dadurch gekennzeichnet,
daß an der Vorrichtung ein koaxiales Anschlußstück (18) zur Zu- und Abführung des Kühlmittels über die Kanäle (21, 7) vorgesehen ist.

6. Vorrichtung nach Anspruch 5, dadurch gekennzeichnet, daß das Kühlsystem (21, 7) der Vorrichtung (1) und das Anschlußstück (18) ein gegen erhöhten Innendruck nach außen abgedichtetes System bilden.

7. Vorrichtung nach Anspruch 1 oder 5, dadurch gekennzeichnet, daß die Betätigungseinrichtung (35) mit dem Element (3) und dem Reibungsmittel (32) ein außenschließendes System bildet.

8. Vorrichtung nach Anspruch 1 oder 5, dadurch gekennzeichnet, daß die Betätigungseinrichtung (35) eine hydraulische Betätigungseinrichtung ist, die über einen Kanal des Anschlußstückes (18) druckbeaufschlagbar und -entlastbar ist.

9. Vorrichtung nach Anspruch 1 oder 5, dadurch gekennzeichnet,
daß das Reibungsmittel (32) ein Lamellenpaket ist, dessen Lamellen (33, 34) abwechselnd an ihrem Innenumfang und an ihrem Außenumfang mit dem ersten und mit dem zweiten Element (2, 3) drehfest verbunden sind und
daß die an ihrem Außenumfang mit dem Element (3) drehfest verbundenen Lamellen (33) an dem Lamellenpaket (32) axial außen angeordnet und von der Betätigungseinrichtung (35) in Axialrichtung gegen das Lamellenpaket (32) spannbar sind.

10. Vorrichtung mit den Merkmalen der Ansprüche 1 und 5.
